# EUROPEAN PATENT APPLICATION

(11) **EP 4 576 335 A1**
(43) Date of publication of application: **25.06.2025**
(21) Application number: 23902001.9
(22) Date of filing: 10.05.2023
(51) Int. Cl.: H01M 10/615

(54) **CONTROL METHOD FOR BATTERY HEATING SYSTEM, AND BATTERY HEATING SYSTEM AND ELECTRIC VEHICLE**

(30) Priority: 12.12.2022 CN 202211599149
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: SU, Tianchen, Ningbo, Zhejiang 315899 (CN); MA, Yanfei, Ningbo, Zhejiang 315899 (CN); ZHAO, Shuxiang, Ningbo, Zhejiang 315899 (CN)
(74) Representative: Kraus & Lederer PartGmbB
(86) International application number: PCT/CN2023/093313
(87) International publication number: WO 2024/124788

(57) **Abstract**

Provided are a control method for a battery heating system, a battery heating system, and an electric vehicle. The battery heating system includes a supercapacitor and a pulse control unit. The control method includes: obtaining a temperature value and an SOC value of a power battery; and issuing a heating instruction to the pulse control unit when the temperature value is lower than a predetermined temperature threshold and the SOC value is higher than a predetermined charge threshold, to allow the pulse control unit to control, based on the heating instruction, bi-directional energy flow between the power battery and the supercapacitor by means of a pulse current, to heat the power battery.

## Description

### CROSS-REFERENCE TO RELATED APPLICATION

This application claims priority to Chinese patent application No. 202211599149.7, titled "CONTROL METHOD FOR BATTERY HEATING SYSTEM, BATTERY HEATING SYSTEM, AND ELECTRIC VEHICLE" and filed on December 12, 2022, the entire contents of which are incorporated herein by reference.

### FIELD

The present disclosure relates to the field of power battery technologies, and more particularly, to a control method for a battery heating system, a battery heating system, and an electric vehicle.

### BACKGROUND

With the rapid development of new energy electric vehicles, a unique problem of endurance reduction with low-temperature in battery electric vehicles has become increasingly prominent. According to statistical data, the endurance reduction of a power battery under a low-temperature condition is generally around 40%, which significantly affects actual driving experience of customers.

To solve the problem of the endurance reduction with low-temperature, three heating methods for a power battery are currently provided to improve an endurance ability of the power battery by heating the power battery. The three heating methods include a method of external heating, a method of internal heating, and a combination method of the external heating and the internal heating methods.

The internal heating method mainly uses a power battery to generate a pulse current to complete heating for the power battery. However, when the power battery discharges, electrical energy will be dissipated in a manner of heat, resulting in energy waste in an overall vehicle system.

### SUMMARY

The present disclosure aims to solve at least one of the technical problems in the related art to some extent. To this end, an object of the present disclosure is to provide a control method for a battery heating system to improve a utilization rate of electrical energy when internal heating is performed on a power battery, and to improve an endurance mileage of a whole vehicle under a low temperature condition, thereby enhancing user experience.

A second object of the present disclosure is to provide a battery heating system.

A third object of the present disclosure is to provide an electric vehicle.

To achieve the above objects, a first embodiment of the present disclosure provides a control method for a battery heating system. The battery heating system includes a supercapacitor and a pulse control unit. The control method includes: obtaining a temperature value and an SOC value of a power battery; and issuing a heating instruction to the pulse control unit when the temperature value is lower than a predetermined temperature threshold and the SOC value is higher than a predetermined charge threshold, to allow the pulse control unit to control, based on the heating instruction, bi-directional energy flow between the power battery and the supercapacitor by means of a pulse current, to heat the power battery.

According to the control method for the battery heating system in an embodiment of the present disclosure, when the power battery needs to be heated, the temperature value and the SOC value of the power battery are obtained. When the temperature value is lower than the predetermined temperature threshold and the SOC value is higher than the predetermined charge threshold, the heating instruction is issued to the pulse control unit, to allow the pulse control unit to control, based on the heating instruction, the bi-directional energy flow between the power battery and the supercapacitor by means of the pulse current, to heat the power battery. Therefore, electrical energy output by the power battery can be stored in the supercapacitor, which improves the utilization rate of the electrical energy, reduces energy waste of the whole vehicle system, and increases the endurance mileage of the whole vehicle under the low temperature condition, thereby enhancing the user experience.

In certain embodiments, the energy flow between the power battery and the supercapacitor is performed alternately.

In certain embodiments, in each heating cycle, the pulse control unit controls firstly the power battery to output the pulse current to the supercapacitor, whereafter, the pulse control unit further controls the supercapacitor to output the pulse current to the power battery.

In certain embodiments, an amplitude and a frequency of the pulse current are determined based on the temperature value and the SOC value of the power battery.

In certain embodiments, the control method further includes: issuing a stop heating instruction to the pulse control unit to control, by the pulse control unit, to stop heating the power battery, when the temperature value is higher than or equal to the predetermined temperature threshold or the SOC value is lower than or equal to the predetermined charge threshold.

In certain embodiments, the control method further includes: controlling the supercapacitor to supply power to a low-voltage onboard electrical device after the heating for the power battery is stopped.

To achieve the above objects, a second embodiment of the present disclosure provides a battery heating system. The system includes: a supercapacitor; a heating control unit configured to obtain a temperature value and an SOC value of a power battery and issue a heating instruction when the temperature value is lower than a predetermined temperature threshold and the SOC value is higher than a predetermined charge threshold; and a pulse control unit configured to control, based on the heating instruction, bi-directional energy flow between the power battery and the supercapacitor by means of a pulse current, to heat the power battery.

According to the battery heating system in an embodiment of the present disclosure, the temperature value and the SOC value of the power battery are obtained by the heating control unit. When the temperature value is lower than the predetermined temperature threshold and the SOC value is higher than the predetermined charge threshold, the heating instruction is issued. The pulse control unit controls, based on the heating instruction, the bi-directional energy flow between the power battery and the supercapacitor by means of the pulse current, to heat the power battery. Therefore, the electrical energy output by the power battery can be stored in the supercapacitor, which improves the utilization rate of the electrical energy, reduces energy waste of the whole vehicle system, and increases the endurance mileage of the whole vehicle under the low temperature condition, thereby enhancing the user experience.

To achieve the above objects, a third embodiment of the present disclosure provides an electric vehicle. The electric vehicle includes the battery heating system according to the second embodiment of the present disclosure.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a schematic structural diagram of a battery heating system according to an embodiment of the present disclosure.
FIG. 2 is a flowchart illustrating a control method for a battery heating system according to an embodiment of the present disclosure.
FIG. 3 is schematic diagram of a waveform of a pulse current according to an embodiment of the present disclosure.
FIG. 4 is a block diagram of a battery heating system according to another embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, the embodiments of the present disclosure.

A control method for a battery heating system, a battery heating system, and an electric vehicle according to embodiments of the present disclosure are described below with reference to the accompanying drawings.

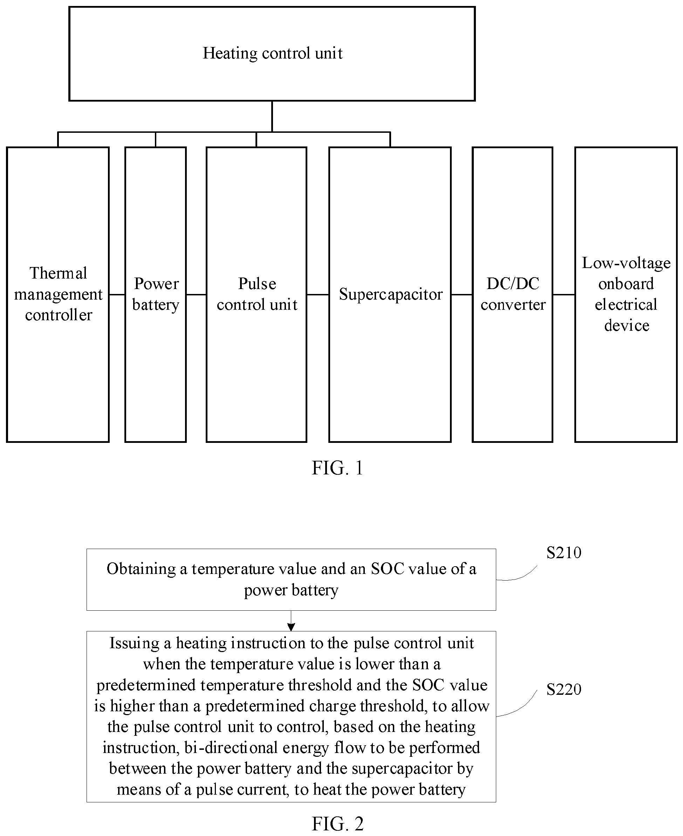

FIG. 1 is a schematic structural diagram of a battery heating system according to an embodiment of the present disclosure. For convenience of understanding, the battery heating system is introduced in detail below in conjunction with FIG. 1.

In this embodiment, the battery heating system includes a power battery, a pulse control unit, a supercapacitor, a heating control unit, and a thermal management controller. The heating control unit is connected to the power battery, the pulse control unit, the supercapacitor, and the thermal management controller. In addition, the thermal management controller, the power battery, the pulse control unit, and the supercapacitor are sequentially connected, respectively. The supercapacitor is further connected to a low-voltage onboard electrical device by a DC/DC converter.

With reference to a structure of the battery heating system described above, a control method for the battery heating system according to the embodiment of the present disclosure is described in detail below. FIG. 2 is a flowchart illustrating a control method for a battery heating system according to an embodiment of the present disclosure. An execution body of the control method for the battery heating system according to the embodiment of the present disclosure is the above-described heating control unit. As illustrated in FIG. 2, the method includes steps as follows.

At step S210, a temperature value and an SOC value of a power battery are obtained.

In an exemplary embodiment of the present disclosure, after the vehicle is powered on, the power battery, the supercapacitor, the thermal management controller, and the pulse control unit can be detected by the heating control unit to determine whether the power battery, the supercapacitor, the thermal management controller, and the pulse control unit are in a normal state. It should be noted that the normal state here refers to a state in which no failure occurs.

When the power battery, the supercapacitor, the thermal management controller, and the pulse control unit are all detected to be in the normal state, the heating control unit sends a request of heating the thermal management controller and the power battery. After receiving the heating request, the thermal management controller acquires a temperature value of the power battery and sends the temperature value to the heating control unit. In this embodiment, a temperature sensor may be disposed at the power battery. The thermal management controller is connected to the temperature sensor. The temperature sensor can be controlled by the thermal management controller to acquire the temperature value of the power battery.

After receiving the request of heating, the power battery may send a current SOC value (a percentage of residual charge) to the heating control unit. Therefore, the heating control unit can obtain the temperature value and the SOC value of the power battery, and can determine whether it is necessary to heat the power battery based on the temperature value and the SOC value of the power battery.

At step S220, a heating instruction is issued to the pulse control unit when the temperature value is lower than a predetermined temperature threshold and the SOC value is higher than a predetermined charge threshold, to allow the pulse control unit to control, based on the heating instruction, bi-directional energy flow between the power battery and the supercapacitor by means of a pulse current, so as to heat the power battery.

After receiving the temperature value and the SOC value of the power battery, the heating control unit determines whether to issue the heating instruction based on the temperature value and the SOC value of the power battery. In an exemplary embodiment of the present disclosure, when the heating control unit determines that the temperature value of the power battery is lower than the predetermined temperature threshold, it indicates that the temperature of the power battery is relatively low, which may affect an endurance ability of the power battery. When the heating control unit determines that the SOC value of the power battery is higher than the predetermined charge threshold, it indicates that a residual charge of the power battery can meet a required amount of charge for a heating process. Therefore, when the temperature is lower than the predetermined temperature threshold and the SOC value is higher than the predetermined charge threshold, it is determined that the power battery will be heated, and the residual charge of the power battery can meet requirements for heating. As such, the heating control unit issues the heating instruction to the pulse control unit.

It should be noted that both the predetermined temperature threshold and the predetermined charge threshold can be manually set as desired, and no specific limitation is made here.

As an example, when the predetermined temperature threshold is set to 15°C, the predetermined charge threshold is set to 10% of a total charge of the power battery. When the temperature value of the power battery received by the heating control unit is 10°C and the SOC value of the power battery is 12%, the heating control unit may issue the heating instruction to the pulse control unit in this case to perform the heating of the power battery.

After the pulse control unit receives the heating instruction, the pulse control unit controls charging and discharging of the power battery, as well as charging and discharging of the supercapacitor, according to the heating instruction. In addition, a current in a pulsed manner is output from or input to the power battery. Similarly, a current in a pulsed manner is output from or input to the supercapacitor, such that the bi-directional energy flow is realized to further heat the power battery.

In certain embodiments, an amplitude and a frequency of the pulse current are determined based on the temperature value and the SOC value of the power battery. In an exemplary embodiment of the present disclosure, the heating control unit sends the temperature value and the SOC value to the pulse control unit. After receiving the heating instruction, the pulse control unit may determine the frequency and the amplitude of the pulse current based on the temperature value and the SOC value, and send the frequency and the amplitude of the pulse current to the power battery. The frequency and the amplitude of the pulse current may be determined by reference to the temperature value and the SOC value as follows. A cross-reference table of the temperature value, the SOC value, the frequency, and the amplitude can be provided. Based on this cross-reference table, the frequency and the amplitude of the pulse current corresponding to the current temperature value and the SOC value can be inquired.

After receiving the frequency and the amplitude, the power battery can provide a corresponding pulse current based on the frequency and the amplitude. Similarly, the supercapacitor outputs a pulse current to the power battery, and the pulse control unit may adjust the frequency and the amplitude of the pulse current output by the supercapacitor such that the frequency and the amplitude of the pulse current received by the power battery to be the same as the frequency and the amplitude output from the power battery.

In certain embodiments, the energy flow between the power battery and the supercapacitor is performed in an alternate manner. In an exemplary embodiment of the present disclosure, the power battery may be controlled to output a pulse current to the supercapacitor, and then the supercapacitor may be controlled to output a pulse current to the power battery. It is also possible to firstly control the supercapacitor to output a pulse current to the power battery, and later control the power battery to output the pulse current to the supercapacitor. In this way, the energy flows alternately between the power battery and the supercapacitor. This power battery heating method allows the electrical energy output from the power battery to repeatedly flow between the power battery and the supercapacitor so as to heat the power battery, which can effectively reduce consumption of electrical energy and improve utilization of energy.

In certain embodiments, in each and every heating cycle, the pulse control unit controls the supercapacitor to output a pulse current to the power battery, after it controls the power battery to output a pulse current to the supercapacitor. In an exemplary embodiment of the present disclosure, firstly outputting a pulse current from the power battery to the supercapacitor and outputting then a pulse current from the supercapacitor to the power battery, can be regarded as a heating cycle. When the pulse control unit receives the heating instruction and the power battery receives the frequency and the amplitude sent by the pulse control unit, the power battery outputs a pulse current with the corresponding frequency and amplitude, and then the pulse current flows to the supercapacitor through the pulse control unit to discharge the power battery. After a half of a heating cycle passes, the pulse control unit adjusts a pulse current direction to allow the supercapacitor to output a pulse current. When the pulse current passes through the pulse control unit, the pulse control unit adjusts the frequency and the amplitude of the pulse current. The adjusted pulse current flows to the power battery and the supercapacitor discharges.

It is worth mentioning that, when the power battery is heated in the above method, there is no need to store energy in advance in the supercapacitor, thereby heating the power battery by internal energy of the power battery.

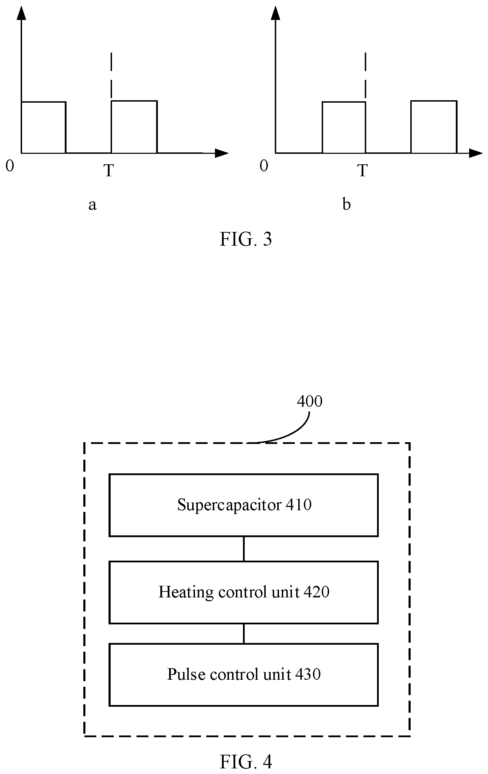

In certain embodiments, the pulse current is a rectangular pulse current. FIG. 3 is a schematic diagram of a waveform of a pulse current according to an embodiment of the present disclosure. As illustrated in FIG. 3, the drawing a of FIG. 3 shows a waveform of a pulse current output by the power battery, and the drawing b of FIG. 3 shows a waveform of a pulse current output by the supercapacitor.

In an exemplary embodiment of the present disclosure, when the pulse control unit, the power battery, and the supercapacitor receive the heating instruction, the pulse control unit determines the frequency and the amplitude of the pulse current based on the temperature value and the SOC value, and sends the frequency and the amplitude to the power battery. The power battery outputs a rectangular pulse current having the corresponding frequency and amplitude. After half of the cycle, the pulse control unit controls and adjusts the direction of the pulse current to enable the supercapacitor to output a rectangular pulse current to the power battery, and enable the pulse control unit to adjust the frequency and amplitude of the rectangular pulse current output from the supercapacitor. After one cycle, the pulse control unit adjusts a direction of the rectangular pulse current again to allow the power battery to output a rectangular pulse current to the supercapacitor. The above process is repeated to complete the heating for the power battery.

In certain embodiments, when the temperature value is higher than or equal to the predetermined temperature threshold or the SOC value is lower than or equal to the predetermined charge threshold, the control method further includes: issuing a stop heating instruction to the pulse control unit to control, by the pulse control unit, to stop heating the power battery.

In an exemplary embodiment of the present disclosure, in a process of heating the power battery, the thermal management controller acquires the temperature value of the power battery in real time, and the thermal management controller sends the temperature value to the heating control unit. Similarly, the power battery may also send the current SOC value to the heating control unit in real time. When the heating control unit detects that the temperature value is higher than or equal to the predetermined temperature threshold, or the SOC value is lower than or equal to the predetermined charge threshold, the heating control unit issues the stop heating instruction to the pulse control unit. After receiving the stop heating instruction, the pulse control unit controls the power battery and the supercapacitor to stop outputting the pulse current, thereby stopping heating the power battery.

When the heating control unit detects that the temperature value is higher than or equal to the predetermined temperature threshold, it indicates that the current temperature value of the power battery has reached the required temperature value. When the SOC value is lower than or equal to the predetermined charge threshold, it means that the residual charge of the power battery can no longer support the heating process of the power battery. Therefore, in the two cases, it is necessary to stop heating the power battery.

In certain embodiments, the control method further includes: controlling the supercapacitor to supply power to a low-voltage onboard electrical device after the heating for the power battery is stopped. In an exemplary embodiment of the present disclosure, after heating the power battery is stopped, electrical energy output by discharging of the power battery may be stored in the supercapacitor. The DC/DC converter can be used to convert the electrical energy stored in the supercapacitor into 12V low voltage, and then output the electrical energy to the low-voltage onboard electrical device, so as to power the low-voltage onboard electrical device by use of the supercapacitor. In this way, the utilization rate of electrical energy can be improved and energy waste of a whole vehicle system can be reduced.

To facilitate understanding, the control method for the battery heating system is described below with a specific example.

After the whole vehicle is powered on, the heating control unit detects whether the power battery, the supercapacitor, the thermal management controller, and the pulse control unit are in a normal state. If the above devices are in the normal state, the heating control unit may send a heating request to the thermal management controller and the power battery.

After receiving the request of heating, the thermal management controller acquires a temperature value of the power battery and sends the temperature value to the heating control unit. After receiving the request of heating, the power battery may send a current SOC value to the heating control unit. When the temperature value is lower than the predetermined temperature threshold and the SOC value is higher than the predetermined charge threshold, the heating control unit issues a heating instruction to the pulse control unit.

After receiving the heating instruction, the pulse control unit determines a frequency and an amplitude of a pulse current based on the temperature value and the SOC value, and then sends the frequency and the amplitude to the power battery. After receiving the frequency and the amplitude, the power battery outputs a rectangular pulse current having a corresponding frequency and amplitude. The rectangular pulse current flows to the supercapacitor through the pulse control unit to discharge the power battery. After half a cycle, the pulse control unit adjusts the direction of the pulse current to allow the supercapacitor to output a rectangular pulse current to the power battery.

When the heating control unit detects that the current temperature value of the power battery is higher than the predetermined temperature threshold or the current SOC value of the power battery is lower than the predetermined charge threshold, the heating control unit issues a stop heating instruction to the pulse control unit, to stop heating the power battery by controlling the pulse control unit.

After the heating for the power battery is stopped, the DC/DC converter is used to convert the electrical energy stored in the supercapacitor into the 12V low voltage, and then the electrical energy is output to a low-voltage onboard electrical device to supply power to the low-voltage onboard electrical device.

Therefore, by controlling the pulse control unit, the bi-directional energy flow between the power battery and the supercapacitor is controlled to realize the heating for the power battery. In addition, excessive electrical energy output during the heating process is stored by the supercapacitor. The stored electrical energy can further supply power to the low-voltage onboard electrical device. Therefore, consumption of electrical energy in the heating process of the power battery is reduced, and the utilization rate of electrical energy is improved, which reduces the energy waste of the whole vehicle system, improves the endurance mileage of the whole vehicle under the low temperature condition, and thereby enhancing the user experience.

FIG. 4 is a block diagram of a battery heating system according to another embodiment of the present disclosure.

As illustrated in FIG. 4, a battery heating system 400 includes a supercapacitor 410; a heating control unit 420 configured to obtain a temperature value and an SOC value of a power battery and issue a heating instruction when the temperature value is lower than a predetermined temperature threshold and the SOC value is higher than a predetermined charge threshold; and a pulse control unit 430 configured to control, based on the heating instruction, bi-directional energy flow between the power battery and the supercapacitor 410 by means of a pulse current, so as to heat the power battery.

Therefore, by means of the heating control unit 420, the temperature value and the SOC value of the power battery are obtained. In addition, the heating instruction is issued when the temperature value is lower than a predetermined temperature threshold and the SOC value is higher than a predetermined charge threshold. With the pulse control unit 430, based on the heating instruction, the bi-directional energy flow between the power battery and the supercapacitor 410 is controlled to be performed by means of the pulse current, to heat the power battery. Therefore, the electrical energy output by the power battery can be stored in the supercapacitor 410, which improves the utilization rate of the electric energy, reduces the energy waste of the whole vehicle system, and improves the endurance mileage of the whole vehicle under the low temperature condition, thereby enhancing the user experience.

In certain embodiments, the energy between the power battery and the supercapacitor 410 flows alternately.

In certain embodiments, the pulse control unit 430 is configured to, in each and every heating cycle, firstly control the power battery to output the pulse current to the supercapacitor 410, and whereafter control the supercapacitor 410 to output the pulse current to the power battery.

In certain embodiments, the pulse control unit 430 is further configured to determine an amplitude and a frequency of the pulse current based on the temperature value and the SOC value of the power battery.

In certain embodiments, the heating control unit 420 is further configured to issue a stop heating instruction to the pulse control unit 430 to control, by the pulse control unit 430, to stop heating the power battery, when the temperature value is higher than or equal to the predetermined temperature threshold or the SOC value is lower than or equal to the predetermined charge threshold.

In certain embodiments, the heating control unit 420 is further configured to control the supercapacitor 410 to supply power to a low-voltage onboard electrical device after the heating for the power battery is stopped.

For convenience and conciseness of the description, it will be clear to those skilled in the art that, for a specific operation process of the module described above, reference can be made to the corresponding process in the method embodiments described above, and thus details thereof will be omitted here.

To realize the above-described embodiments, the present disclosure further provides an electric vehicle. The electric vehicle includes the battery heating system according to the above-described embodiments.

In addition, it should be noted that other configurations and functions of the electric vehicle according to the embodiments of the present disclosure are known to those skilled in the art, and will not be described here in order to reduce redundancy.

It should be noted that, the logical and/or steps described in the flowchart or otherwise depicted herein, for example, may be considered as a fixed sequence list of executable instructions for implementing logical functions, and may be specifically implemented in any computer-readable medium for use for, or in conjunction with, an instruction execution system, apparatus, or device, such as a computer-based system, a system including a processor, or other systems that may fetch and execute instructions from the instruction execution system, apparatus, or device. For this disclosure, the "computer-readable medium" may be any apparatus that can include, store, communicate, propagate, or transport the program for use for or in conjunction with the instruction execution system, apparatus, or device. More specific examples (a non-exhaustive list) of the computer-readable medium include: an electrical connection portion (an electrical device) having one or more of wires, a portable computer disk cartridge (a magnetic device), a random access memory (RAM), a read-only memory (ROM), an erasable programmable read-only memory (EPROM or Flash memory), an optical apparatus, and a portable compact disc read-only memory (CD-ROM). In addition, the computer-readable mediums may even be paper or other suitable mediums on which the program may be printed, since the program may be obtained electronically by, for example, optical scanning of the paper or other mediums followed by editing, interpretation or other suitable processing if necessary, and then stored in a computer memory.

It should be understood that each part of the present disclosure can be implemented in hardware, software, firmware or any combination thereof. In the above embodiments, multiple steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

In the present disclosure, the description with reference to the terms "one embodiment", "certain embodiments", "an example", "a specific example", or "certain examples", etc., means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. Further, the particular features, structures, materials, or characteristics described may be combined in any suitable manner in one or more embodiments or examples.

In the description of the present disclosure, it should be understood that, the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms such as "first" "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, unless otherwise specifically defined.

In the present disclosure, unless otherwise clearly specified and limited, terms, such as "mounting", "connect", "connect to", "fixed to", or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

In the present disclosure, unless otherwise clearly specified and limited, the first feature "on" or "under" the second feature may mean that the first feature is in direct contact with the second feature, or the first and second features are in indirect contact through an intermediate. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is lower than that of the second feature.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A control method for a battery heating system, wherein the battery heating system comprises a supercapacitor and a pulse control unit, and the control method comprises:
obtaining a temperature value and an SOC value of a power battery; and
issuing a heating instruction to the pulse control unit when the temperature value is lower than a predetermined temperature threshold and the SOC value is higher than a predetermined charge threshold, to allow the pulse control unit to control, based on the heating instruction, bi-directional energy flow between the power battery and the supercapacitor by means of a pulse current, to heat the power battery.

2. The control method for the battery heating system according to claim 1, wherein the energy flow between the power battery and the supercapacitor is performed alternately.

3. The control method for the battery heating system according to claim 2, wherein in each heating cycle, the pulse control unit firstly controls the power battery to output the pulse current to the supercapacitor, and whereafter controls the supercapacitor to output the pulse current to the power battery.

4. The control method for the battery heating system according to any one of claims 1 to 3, wherein an amplitude and a frequency of the pulse current are determined based on the temperature value and the SOC value of the power battery.

5. The control method for the battery heating system according to any one of claims 1 to 4, further comprising:
issuing a stop heating instruction to the pulse control unit to control, by the pulse control unit, to stop heating the power battery, when the temperature value is higher than or equal to the predetermined temperature threshold or the SOC value is lower than or equal to the predetermined charge threshold.

6. The control method for the battery heating system according to claim 5, further comprising:
controlling the supercapacitor to supply power to a low-voltage onboard electrical device after the heating for the power battery is stopped.

7. A battery heating system, comprising:
a supercapacitor;
a heating control unit configured to obtain a temperature value and an SOC value of a power battery and issue a heating instruction when the temperature value is lower than a predetermined temperature threshold and the SOC value is higher than a predetermined charge threshold; and
a pulse control unit configured to control, based on the heating instruction, bi-directional energy flow between the power battery and the supercapacitor by means of a pulse current, to heat the power battery.

8. The battery heating system according to claim 7, wherein the energy flow between the power battery and the supercapacitor is performed alternately.

9. The battery heating system according to claim 8, wherein the pulse control unit is configured to, in each heating cycle, firstly control the power battery to output the pulse current to the supercapacitor, and whereafter to control the supercapacitor to output the pulse current to the power battery.

10. The battery heating system according to any one of claims 7 to 9, wherein the pulse control unit is further configured to determine an amplitude and a frequency of the pulse current based on the temperature value and the SOC value of the power battery.

11. The battery heating system according to any one of claims 7 to 10, wherein the heating control unit is further configured to issue a stop heating instruction to the pulse control unit to control, by the pulse control unit, to stop heating the power battery, when the temperature value is higher than or equal to the predetermined temperature threshold or the SOC value is lower than or equal to the predetermined charge threshold.

12. The battery heating system according to claim 11, wherein the heating control unit is further configured to control the supercapacitor to supply power to a low-voltage onboard electrical device after the heating for the power battery is stopped.

13. An electric vehicle, comprising the battery heating system according to any one of claims 7 to 12.
